# EUROPÄISCHE PATENTSCHRIFT

(11) **EP 2 614 993 B1**
(45) Veröffentlichungstag und Bekanntmachung des Hinweises auf die Patenterteilung: **12.07.2017**
(21) Anmeldenummer: 12193849.2
(22) Anmeldetag: 22.11.2012
(51) Int. Cl.: B60Q 9/00

(54) **Verfahren zum selektiven Ausgeben eines Warnsignals, entsprechende Steuereinheit und Steuer- und Navigationssystem**
Method for the selective output of a warning signal, corresponding controlling unit and control and navigation system
Procédé d'émission sélective d'un signal d'avertissement, unité de contrôle et système de contrôle et de navigation correspondants

(30) Priorität: 11.01.2012 DE 102012200332
(43) Veröffentlichungstag der Anmeldung: 17.07.2013
(73) Patentinhaber: ROBERT BOSCH GMBH, 70442 Stuttgart (DE)
(72) Erfinder: Kuttenberger, Alfred, 71263 Weil Der Stadt (DE)

(56) Entgegenhaltungen:
- EP-A1- 1 878 615
- DE-A1-102004 055 371
- JP-A- 2000 293 788
- JP-A- 2006 338 594
- JP-A- 2008 027 309
- JP-A- 2010 176 591
- US-A1- 2005 110 620
- US-A1- 2007 257 783
- US-A1- 2010 328 055

## Beschreibung

Die vorliegende Erfindung betrifft ein Verfahren zum selektiven Ausgeben eines Warnsignals in einem Fahrzeug, wobei einer Steuereinheit von mindestens einem Sensor eine Information über ein Objekt innerhalb eines Bereiches an dem Fahrzeug übermittelt wird, gemäß dem Oberbegriff des Anspruches 1. Ferner betrifft die vorliegende Erfindung eine Steuereinheit zum selektiven Ausgeben eines Warnsignals in einem Fahrzeug, wobei der Steuereinheit eine Information über ein Objekt innerhalb eines Bereiches an dem Fahrzeug von mindestens einem Sensor übermittelbar ist, gemäß dem Oberbegriff des unabhängigen Anspruches 5. Weiterhin betrifft die Erfindung ein Steuer- und Navigationssystem mit einer derartigen Steuereinheit.

### Stand der Technik

Aus dem Stand der Technik sind Einparkhilfen, d. h. Systeme zur Unterstützung bei Einparkvorgängen, bekannt, die mit einem akustischen Warnsignal den Fahrer vor Objekten innerhalb eines Bereiches an dem Fahrzeug warnen. Manchmal werden so jedoch unnötige Warnungen generiert.

Die DE 10 2006 057 751 A1 offenbart ein Verfahren zur Kollisionsvermeidung von Fahrzeugen mit Objekten. Hierbei wird der Abstand eines Fahrzeuges mit einem Objekt bestimmt und in Abhängigkeit von einem Abstand zu dem Objekt gegebenenfalls ein akustisches Warnsignal ausgegeben. Das Warnsignal wird jedoch nicht ausgegeben, wenn aufgrund der aktuellen Lenkrichtung des Fahrzeuges keine Kollisionsgefahr mit dem Objekt droht. Hierdurch soll der Fahrer des Fahrzeuges vor unnötigen Warnsignalen geschützt werden.

Es kann jedoch dennoch sein, dass der Fahrer unnötige Warnsignale erhält, z. B. wenn der Fahrer sich nicht in einem Einparkvorgang befindet. Hierbei können beispielsweise Fußgänger, die sehr nahe an dem Fahrzeug eine Straße queren, ein Warnsignal auslösen. Erhält der Fahrer häufig unnötige Warnsignale, so stumpft der Fahrer gegenüber den Warnsignalen ab. Ferner lenken die unnötigen Warnsignale den Fahrer ab, so dass die Verkehrssicherheit gefährdet wird.

Aus der JP 2010-176591 A ist ein Anzeigegerät bekannt, das dem Fahrer eines Fahrzeugs Warnhinweise ausgibt, wenn ein Fußgänger von einer Kamera am Fahrzeug detektiert wird. Der Warnhinweis wird auf der Windschutzscheibe des Fahrzeugs ausgegeben. Die Intensität des Warnsignals kann abhängig von Informationen eines Navigationssystems variiert werden.

Die US 2005/0110620 A1 beschreibt ein System von mehreren Abstandssensoren, die in unterschiedlicher Einbauhöhe an einem Fahrzeug angeordnet sind. Mittels der Sensoren können Entfernungen zu Hindernissen, sowie die Höhe eines Hindernisses bestimmt werden und Abhängig von der Hindernishöhe Warnungen an den Fahrer ausgegeben werden. Dabei wird die Steigung der Straße berücksichtigt, wobei diese Information mittels eines Navigationssystems positionsabhängig abgerufen werden kann.

Die JP 2000-293788 A beschreibt ein Satelliten-Navigationssystem für Fahrzeuge, bei dem regelmäßig aktuelle Navigationsdaten von einem zentralen Server zu Verfügung gestellt werden. Implementiert ist außerdem eine Funktion zur Erkennung von Fußgängern oder ähnlichem, wobei der Fahrer entsprechend gewarnt wird.

Die JP 2004-027309 A zeigt ein Fahrerassistenzsystem zur Erkennung von bevorstehenden Kollisionen, wobei mehrere bildgebende Sensoren eingesetzt werden, um potentielle Hindernisse zu identifizieren. Parameter für eine Kollisionswahrscheinlichkeit können abhängig von der GPS-Position des Fahrzeugs angepasst werden.

Die JP 2006-338594 A zeigt ein Fußgängererkennungssystem für Fahrzeuge, das Fußgänger durch die Verwendung einer IR-Kamera und einer Kamera für sichtbares Licht auch bei schwierigen Lichtverhältnissen zuverlässig erkennt. Das System kann zusätzlich Informationen eines Spurassistenten oder eines Navigationssystems auswerten, um eine Gefährdung des Fußgängers zu beurteilen.

Die US 2007/257783 A1 zeigt ein Warnsystem für den Fahrer eines Fahrzeugs, z.B. vor Fußgängern. Ein Warnsignal kann abhängig vom Bewegungszustand des Fahrzeugs oder der mittels eines Navigationssystems bestimmten Fahrzeugposition ermöglicht oder unterdrückt werden.

### Offenbarung der Erfindung

Es ist die Aufgabe der vorliegenden Erfindung, ein Verfahren, ein Steuergerät und ein Steuer- und Navigationssystem zum selektiven Ausgeben eines Warnsignals zur Verfügung zu stellen, das die Verkehrsicherheit erhöht.

Zur Lösung der Aufgabe wird ein Verfahren mit den Merkmalen des Anspruches 1 vorgeschlagen. Vorteilhafte Weiterbildungen des Verfahrens sind in den abhängigen Verfahrensansprüchen angegeben. Die Aufgabe wird weiterhin durch eine Steuereinheit mit den Merkmalen des unabhängigen Anspruchs 5 und durch ein Steuer- und Navigationssystem mit den Merkmalen des Anspruchs 7 gelöst. Vorteilhafte Weiterbildungen der Steuereinheit sind in dem abhängigen Anspruch 6 angegeben. Vorteilhafte Weiterbildungen des Steuer- und Navigationssystem sind in dem abhängigen Anspruch 8 angegeben. Merkmale und Details, die im Zusammenhang mit dem erfindungsgemäßen Verfahren beschrieben sind, gelten dabei selbstverständlich auch im Zusammenhang mit der erfindungsgemäßen Steuereinheit und dem erfindungsgemäßen Steuer- und Navigationssystem und umgekehrt. Dabei können die in den Ansprüchen und in der Beschreibung erwähnten Merkmale jeweils einzeln für sich oder in Kombination erfindungswesentlich sein.

Erfindungsgemäß ist bei dem Verfahren vorgesehen, dass der Steuereinheit zumindest eine Information bezüglich einer Position des Fahrzeuges von einem Navigationssystem übermittelt wird, wobei daraufhin die Steuereinheit in Abhängigkeit von der Position des Fahrzeuges ein Warnsignal ausgeben lässt oder unterdrückt. Das Warnsignal wird zudem nur ausgegeben, wenn sich ein Objekt innerhalb des Bereiches in der Umgebung des Fahrzeugs befindet. Bei dem Fahrzeug kann es sich insbesondere um ein Kraftfahrzeug handeln.

Die Steuereinheit und das Navigationssystem sind derart miteinander gekoppelt, dass das Navigationssystem der Steuereinheit eine Information übermitteln kann. Diese Information spiegelt die Position der Fahrzeuges, d. h. den Ort, an dem sich das Fahrzeug gerade befindet, wider. Die Steuereinheit verwertet diese von dem Navigationssystem erhaltene Information derart, dass die Steuereinheit an manchen Positionen des Fahrzeuges ein Warnsignal ausgeben lässt, wenn ein Objekt sich innerhalb des Bereiches in der Umgebung des Fahrzeugs befindet und an anderen Positionen kein Warnsignal ausgeben lässt, wenn ein Objekt sich innerhalb des Bereiches befindet. Hierbei kann insbesondere vorgesehen sein, dass die Steuereinheit prinzipiell überall das Warnsignal ausgeben lässt, es sei denn, die aktuelle Position des Fahrzeuges ist von der Warnsignalausgabe ausgeschlossen. Alternativ kann es sein, dass die Steuereinheit prinzipiell kein Warnsignal ausgeben lässt, es sei denn, die Position des Fahrzeuges ist für die Ausgabe des Warnsignals vorgesehen. Durch die Abhängigkeit der Ausgabe des Warnsignals von der Position des Fahrzeuges wird selektiv manchmal kein Warnsignal ausgegeben, selbst wenn sich ein Objekt in dem Bereich an dem Fahrzeug befindet.

Dadurch, dass die Ausgabe des Warnsignals selektiv von der Position des Fahrzeuges abhängt, können unnötige Warnsignale verhindert werden. Somit ist der Fahrer des Fahrzeuges gegenüber den verbliebenen Warnsignalen aufmerksamer. Auch wird der Fahrer nicht durch die unnötigen Warnsignale von dem Verkehrsgeschehen abgelenkt. Somit wird die Verkehrssicherheit erhöht.

Das Verfahren dient zur Ausgabe von Warnsignalen. Insbesondere kann der eigentliche Zweck der Ausgabe von Warnsignalen darin liegen, einem Fahrer des Fahrzeuges während eines Ein- und/oder Ausparkvorgangs vor möglichen Kollisionen mit Objekten in der Nähe des Fahrzeuges zu warnen. Die Steuereinheit kann somit die Steuereinheit einer Einparkhilfe sein. Das Navigationssystem ist in diesem Fall mit der Einparkhilfe gekoppelt.

Der Bereich in der Umgebung des Fahrzeugs, in dem ein Objekt von einem Sensor erkannt und zumindest eine Information darüber der Steuereinheit übermittelt wird, kann an dem Fahrzeug angrenzen. Insbesondere kann der Bereich einen Teilbereich an einem vorderen Ende des Fahrzeuges und an einem hinteren Ende des Fahrzeuges umfassen. Der Bereich kann um das Fahrzeug ganz herumgeführt sein. Vorzugsweise jedoch umfasst der Bereich nur den Teilbereich am vorderen und am hinteren Ende des Fahrzeugs, während seitlich des Fahrzeuges kein Bereich, in denen Objekte erfasst werden, vorgesehen ist. Um Objekte innerhalb des Bereiches zu erfassen, ist mindestens ein Sensor, z. B. ein Ultraschallsensor, an dem Fahrzeug angeordnet. Bevorzugt sind mehrere Sensoren, insbesondere jeweils in einem vorderen und/oder hinterem Ende des Fahrzeuges, angeordnet. Die Information, die der mindestens eine Sensor der Steuereinheit übermittelt, umfasst insbesondere das Vorhandensein und den Abstand des Objektes zum Fahrzeug.

Die Ausgabe des Warnsignals kann nicht nur von der Position des Fahrzeuges und dem Vorhandensein eines Objektes abhängen, sondern auch von der Fahrzeuggeschwindigkeit. So wird bevorzugt ein Warnsignal nur ausgegeben, wenn zugleich die Fahrzeuggeschwindigkeit unter einem Grenzwert, z. B. 20 km/h, liegt. Insbesondere ist die Ausgabe des Warnsignals nur von der Position des Fahrzeuges, des Vorhandenseins eines Objektes und der Fahrzeuggeschwindigkeit abhängig. Es liegt insbesondere keine Abhängigkeit von einem eingelegten Gang des Fahrzeuges oder einer Fahrtrichtung vor. Wird im Folgenden die Unterdrückung oder die Ausgabe eines Warnsignals erwähnt, so wird jeweils davon ausgegangen, dass die zumindest eine weitere Voraussetzung, d. h. das Vorhandensein eines Objektes in dem Bereich an dem Fahrzeug und eventuell ein Unterschreiten des Grenzwertes der Fahrzeuggeschwindigkeit, ebenfalls vorliegt, ohne dieses jeweils explizit zu erwähnen.

Bei dem Warnsignal handelt es sich insbesondere um ein akustisches Warnsignal. Hierzu ist in dem Fahrzeug ein Tongenerator angeordnet, den die Steuereinheit in Abhängigkeit von der Position des Fahrzeuges das Warnsignal ausgeben lässt. Zusätzlich oder alternativ kann ein optisches Warnsignals ausgegeben werden. Die Steuereinheit kann dementsprechend zusätzlich oder alternativ zumindest eine Lampe in oder an dem Fahrzeug das Warnsignal ausgeben lassen.

Die Positionen des Fahrzeuges können bevorzugt in genau zwei Kategorien eingeordnet werden: eine erste Kategorie, in der ein Warnsignal ausgegeben wird, wenn sich ein Objekt in dem Bereich an dem Fahrzeug befindet, und eine zweite Kategorie, in der kein Warnsignal ausgegeben wird, selbst wenn sich ein Objekt in dem Bereich an dem Fahrzeug befindet.

Erfindungsgemäß ist vorgesehen, dass die zweite Kategorie Positionen, die an einem Fußgängerüberweg angeordnet sind, umfasst. Insbesondere können Positionen, die unmittelbar an einem Fußgängerüberweg liegen, umfasst sein. Beispielsweise sind dieses Positionen, bei denen sich der Bereich in der Umgebung des Fahrzeugs mit dem Fußgängerüberweg überschneidet und/oder das Fahrzeug als erstes Fahrzeug sich an dem Fußgängerüberweg befindet. Zu den Fußgängerüberwegen können alle Orte zählen, an denen mit einer hohen Wahrscheinlichkeit Fußgänger eine Straße queren, wie z. B. an Ampeln, an Kreuzungen oder an Zebrastreifen. Es können aber auch gegebenenfalls unmarkierte Orte den Fußgängerüberwegen, z. B. vor Einkaufszentren oder/und Schulen, zugeordnet werden. Somit wird insbesondere dann ein Warnsignal nicht ausgegeben, wenn sich die Position des Fahrzeuges, insbesondere unmittelbar, an einem Fußgängerüberweg befindet.

Es ist vorgesehen, dass die Warnsignalunterdrückung nur auf die Positionen an zumindest einem Fußgängerüberweg beschränkt ist. Das heißt, die zweite Kategorie umfasst nur Positionen, die, insbesondere unmittelbar, an Fußgängerüberwegen liegen. An Positionen, die sich außerhalb einer unmittelbaren Nähe eines Fußgängerüberweges befinden, wird hingegen ein Warnsignal ausgegeben.

Alternativ erfolgt eine Ausgabe des Warnsignals nur dann, wenn sich das Fahrzeug in der Nähe eines Stellplatzes befindet. Hierdurch werden Warnsignale vor allem dann generiert, wenn sich das Fahrzeug potentiell in einem Parkvorgang befindet. Ein Stellplatz kann sich beispielsweise in einem Parkhaus, auf einem Parkplatz und/oder in der Nähe eines als Parkplatz ausgewiesenem Randstreifen befinden. In der ersten Kategorie befinden sich in dieser Alternative nur Positionen in der Nähe eines Stellplatzes.

Damit das Verfahren durchgeführt werden kann, muss erfindungsgemäß eine geografische Information, insbesondere eine Karte, über die Umgebung des Fahrzeuges verwendet werden. Die geografische Information muss die relevanten Informationen, die eine Zuordnung in die erste oder die zweite Kategorie ermöglichen, umfassen. Erfindungsgemäß muss die geografische Information relevante Orte, die die Zuordnung ermöglichen, wie Fußgängerüberwege und beispielsweise Stellplätze, enthalten. Eine solche geografische Information wird im Folgenden als verfahrenstaugliche geografische Information bezeichnet.

Es kann vorgesehen sein, dass dem Navigationssystem eine verfahrenstaugliche geografische Information zugänglich ist. Hierbei umfasst ein Zugänglich sein eine Speicherung in dem Navigationssystem als auch einen Zugriff auf die geografische Information, die auf einem anderen Datenträger gespeichert ist. Ist dem Navigationssystem verfahrenstaugliche geografische Information zugänglich, so ist es möglich, dass das Navigationssystem die Unterteilung in die zwei Kategorien vornimmt und der Steuereinheit die Information übermittelt, dass die Position des Fahrzeuges zu der ersten oder der zweiten Kategorie gehört.

Alternativ dazu kann es sein, dass das Navigationssystem Ortungsdaten des Fahrzeuges, z. B. die geographischen Koordinaten des Fahrzeuges, zusammen mit der verfahrenstauglichen geografischen Information an die Steuereinheit übermittelt. Die Zuordnung der Position des Fahrzeuges zu der ersten oder der zweiten Kategorie erfolgt jedoch in der Steuereinheit.

Alternativ hierzu ist die verfahrenstaugliche geografische Information in der Steuereinheit selber unabhängig von dem Navigationssystem zugänglich. Das Navigationssystem übermittelt die Ortungsdaten des Fahrzeuges an die Steuereinheit. Die Steuereinheit selber nimmt anhand der eigenen geografischen Information die Einteilung der Position des Fahrzeuges in die erste oder die zweite Kategorie vor.

Eine Zuordnung zu einer Kategorie, wie sie in den vorherigen Abschnitten beschrieben ist, kann auch nur implizit geschehen z. B. dadurch, dass bestimmt wird, dass der Abstand von dem Fahrzeug zu einem Ort, wie z. B. einem Fußgängerüberweg, über oder unter einem Grenzabstand liegt.

Es kann sein, dass der Steuereinheit eine Information darüber vorliegt, ob sich das Fahrzeug bewegt. Es kann sein, dass als zusätzliche Voraussetzung neben der Zuordnung der Position des Fahrzeuges in die zweite Kategorie ein Warnsignal nur dann unterdrückt wird, wenn sich das Fahrzeug im Stillstand befindet. So kann weiter die Sicherheit erhöht werden. In diesem Fall wird bei einem fahrenden Fahrzeug ein Warnsignal auch dann erzeugt, obwohl die Position des Fahrzeuges der zweiten Kategorie zugeordnet ist. So kann eine Kollision auch außerhalb eines Parkvorganges verhindert werden. Insbesondere kann das Anfahren eines Fußgängers durch ein Warnsignal an Fußgängerüberwegen verhindert werden, wobei das Warnsignal an dem Fußgängerüberweg ausgegeben wird, wenn sich das Fahrzeug bewegt. Der Steuereinheit kann die Information vorliegen, wie schnell sich das Fahrzeug bewegt. In diesem Fall ist es denkbar, dass als zusätzliche Voraussetzung neben der Zuordnung der Position des Fahrzeuges in die zweite Kategorie ein Warnsignal nur unterhalb eines Schwellenwertes, z. B. 5 km/h, unterdrückt wird.

Ebenfalls kann es sein, dass die Steuereinheit von den Sensoren solche Informationen über das Objekt in dem Bereich in der Umgebung des Fahrzeugs erhält, die es der Steuereinheit ermöglicht, festzustellen, ob es sich bei dem Objekt um einen Fußgänger handelt. Hierbei umfasst der Begriff Fußgänger auch Fahrräder, Tiere oder sonstige querende Objekte. Die Informationen, die die Sensoren hierzu übermitteln, können z. B. die Größe des Objektes und/oder die Geschwindigkeit des Objektes enthalten. Hierbei ist es denkbar, dass die Steuereinheit als zusätzliche Voraussetzung für die Unterdrückung des Warnsignals das Warnsignal nur dann unterdrücken lässt, wenn die Steuereinheit zuvor festgestellt hat, dass es sich um einen Fußgänger handelt. Wird anhand der Geschwindigkeit festgestellt, dass es sich nicht um einen querenden Fußgänger, sondern um ein länger in dem Bereich verbleibendes Objekt, z. B. ein stationäres Objekt handelt, so wird das Warnsignal auch dann ausgegeben, wenn die Position der zweiten Kategorie zugeordnet ist. Alternativ kann vorgesehen sein, dass nur bei einem hinreichend schnell querenden Fußgänger das Warnsignal unterdrückt wird, während bei einem langsamen Fußgänger, wie z. B. einem Kind oder einer älteren Person, ein Warnsignal ausgegeben wird.

Es ist denkbar, dass das erfindungsgemäße Verfahren von dem Fahrer manuell aktivierbar und/oder deaktivierbar ist. Hierzu kann innerhalb des Fahrzeuges ein Schalter angeordnet sein. Bei dieser Ausgestaltung der Erfindung kann der Fahrer selber entscheiden, ob der Fahrer z. B. ein durch querende Fußgänger an Fußgängerüberwegen verursachtes Warnsignal als für ihn verkehrssicherheitsgefährdend oder verkehrssicherheitsfördernd einstuft.

Die Aufgabe der Erfindung wird auch gelöst durch eine Steuereinheit, der zumindest eine Information bezüglich einer Position des Fahrzeuges von einem Navigationssystem übermittelbar ist. Ein Warnsignal ist von der erfindungsgemäßen Steuereinheit in Abhängigkeit von der Position des Fahrzeuges und eines Vorhandenseins des Objektes ausgebbar oder unterdrückbar.

Ferner wird die Aufgabe der Erfindung auch durch ein Steuer- und Navigationssystem, das die Steuereinheit und das Navigationssystem umfasst, gelöst. Hierbei stellt insbesondere das Navigationssystem der Steuereinheit eine Information über eine Position des Fahrzeuges zur Verfügung.

Weitere, die Erfindung verbessernde Maßnahmen ergeben sich aus der nachfolgenden Beschreibung zu den Ausführungsbeispielen der Erfindung, welche in den Figuren schematisch dargestellt sind. Sämtliche aus den Ansprüchen, der Beschreibung oder den Zeichnungen hervorgehende Merkmale und/oder Vorteile, einschließlich konstruktiver Einzelheiten, räumlicher Anordnung und Verfahrensschritte, können sowohl für sich als auch in den verschiedensten Kombinationen erfindungswesentlich sein. Es zeigen:
- Fig. 1: Ausschnitt aus einer Karte mit Positionen von Fahrzeugen, die einer ersten und einer zweiten Kategorie zugeordnet sind,
- Fig. 2: ein erfindungsgemäßes Steuer- und Navigationssystem mit einer erfindungsgemäßen Steuereinheit, die Teil einer Einparkhilfe ist,
- Fig. 3: ein erstes Ausführungsbeispiel für ein erfindungsgemäßes Verfahren und
- Fig. 4: ein zweites Ausführungsbeispiel für ein erfindungsgemäßes Verfahren.

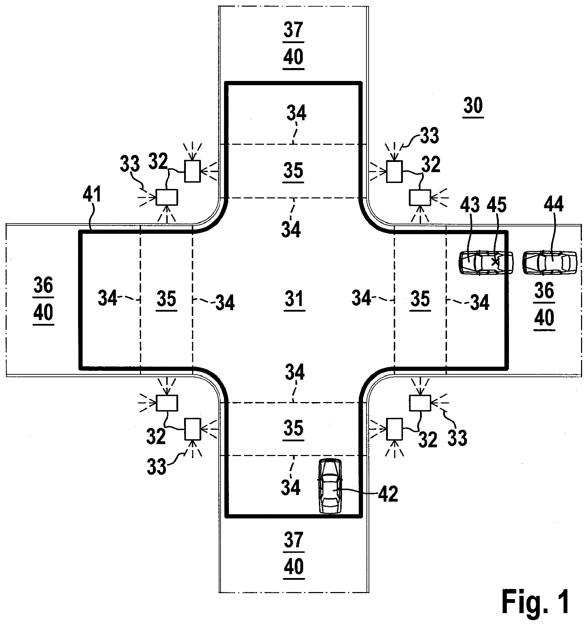

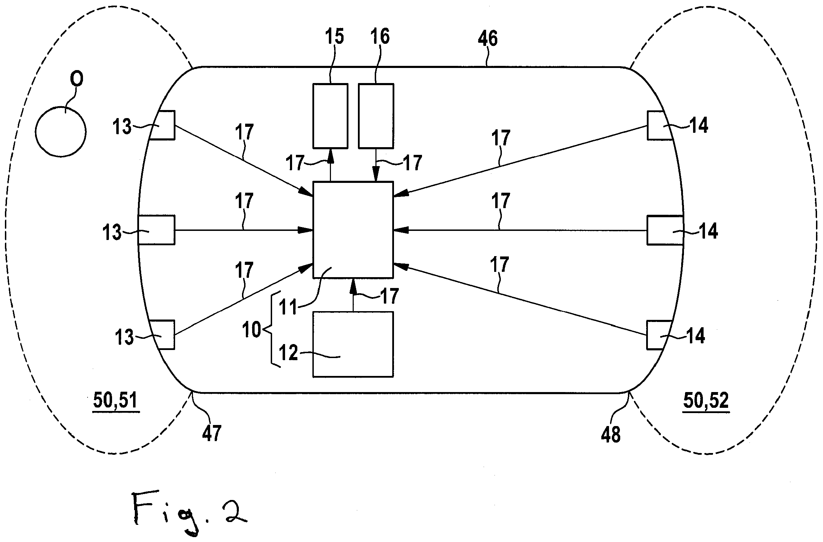

In Figur 1 ist ein Ausschnitt aus einer Karte 30 als geografische Information über eine Umgebung eines Kraftfahrzeuges dargestellt. Die Karte 30 kann einer Steuereinheit 11 und/oder einem Navigationssystem 12, die in Figur 2 dargestellt sind, zugänglich sein. Auf dem in Figur 1 dargestellten Ausschnitt der Karte 30 ist eine Kreuzung 31 zweier Straßen 36, 37 dargestellt, an der acht Ampeln 32, die in Richtung der Strahlen 33 Licht aussenden, aufgestellt sind. An der Kreuzung 31 sind vier Fußgängerüberwege 35 innerhalb von auf der Kreuzung 31 gestrichelt aufgemalten Markierungen 34 vorgesehen. Der in Figur 1 dargestellte Ausschnitt der Karte 30 ist in zwei virtuelle Abschnitte unterteilt: zum einen in einen ersten Abschnitt 40, der die Straßen 36, 37 außerhalb der Kreuzung 30 umfasst, und in einen zweiten Abschnitt 41, der die Kreuzung 31 selber mit den Fußgängerüberwegen 35 umfasst und mit einer dicken Strichstärke umrandet dargestellt ist.

Zu dem Ausschnitt der Karte 30 sind in Figur 1 drei Fahrzeuge 42, 43, 44 hinzugefügt worden. Das Fahrzeug 42 befindet sich vollständig innerhalb des zweiten Abschnitts 41, das Fahrzeug 43 befindet sich mit einem Referenzpunkt 45 innerhalb des zweiten Abschnitts 41 und das Fahrzeug 44 befindet sich in dem ersten Abschnitt 40. Aufgrund des im zweiten Abschnitt liegenden Referenzpunktes 45 wird das Fahrzeug 43 als sich in dem zweiten Abschnitt 41 befindend erachtet. Die Abschnitte 40, 41 sind so gewählt, dass Fahrzeuge 42, 43, die sich unmittelbar, d. h. ohne weitere, vor ihnen positionierte Fahrzeuge, an den Fußgängerüberwegen 35 befinden, sich in dem zweiten Abschnitt 41 aufhalten. Hingegen befindet sich das Fahrzeug 44, das nur mittelbar hinter dem Fahrzeug 43 an dem Fußgängerüberweg 35 steht, in dem ersten Abschnitt 40. Die Position des Fahrzeuges 44, das sich in dem ersten Abschnitt 40 befindet, kann von dem erfindungsgemäßen Steuer- und Navigationssystem 10 einer ersten Kategorie K1 und die Positionen der Fahrzeuge 42, 43, die sich in dem zweiten Abschnitt 41 befinden, einer zweiten Kategorie zugeordnet werden. Die Zuordnung kann explizit oder implizit geschehen. So müssen die Bereiche 40, 41 nicht explizit zur Verfügung stehen, sondern es können auch Abstände der Fahrzeuge 42, 43, 44 zu den Fußgängerüberwegen 35 bestimmt werden. Für Fahrzeuge 44 in der ersten Kategorie K1 wird von der Steuereinheit 11 ein Warnsignal W veranlasst, während für Fahrzeuge 42, 43, deren Positionen der zweiten Kategorie zugeordnet werden, ein Warnsignal W unterdrückt wird. Hierdurch werden unnötige Warnsignale vermieden, so dass die Verkehrssicherheit erhöht wird.

In Fig. 2 ist ein erfindungsgemäßes Steuer- und Navigationssystem 10 mit einer erfindungsgemäßen Steuereinheit 11 in einem Fahrzeug 46 dargestellt. Die Steuereinheit 11 ist Teil einer Einparkhilfe. Die Einparkhilfe weist sechs Sensoren 13, 14 auf. Die Sensoren 13, 14 detektieren das Vorhandensein eines Objektes O innerhalb eines Bereiches 50 in der Umgebung des Fahrzeugs 46. Drei Sensoren 13 sind in einem vorderen Ende 47 des Fahrzeuges 46 und drei Sensoren 14 in einem hinteren Ende 48 des Fahrzeuges 46 angeordnet. Hierbei ist der Bereich 50 in einen Teilbereich 51 am vorderen Ende 47 des Fahrzeuges 46, der von den Sensoren 13 überwacht wird, und in einen Teilbereich 52 am hinteren Ende 48 des Fahrzeuges 46, der von den Sensoren 14 überwacht wird, aufgeteilt. Die Sensoren übermitteln der Steuereinheit 11 das Vorhandensein und den Abstand des detektierenden Sensors 13 zu dem Objekt O.

Das Navigationssystem 12 ist mit der Steuereinheit 11 verknüpft und übermittelt der Steuereinheit 11 mindestens eine Information bezüglich der Position des Fahrzeuges 46. Die Steuereinheit 11 kann, nachdem die Steuereinheit 11 die von den Sensoren 13, 14 und dem Navigationssystem 12 übermittelten Informationen verwendet hat, einen Tongenerator 15 der Einparkhilfe veranlassen, ein akustisches Warnsignal W auszugeben, das vor einem Objekt O innerhalb des Bereiches 50 warnt.

In dem Fahrzeug 46 ist ein Schalter 16 angeordnet, über den ein Fahrer des Fahrzeuges 46 die Abhängigkeit der Ausgabe des Warnsignals W von der Position des Fahrzeuges 46 manuell aktivieren und deaktivieren kann.

Die Steuereinheit 11 empfängt Signale und/oder Informationen von den Sensoren 13, 14, dem Navigationssystem 12 und dem Schalter 16 und übermittelt ein Signal und/oder eine Information an den Tongenerator 15 über Kommunikationswege 17. Die Kommunikationswege 17 können durch geeignete Kabel oder auch kabellos ausgebildet sein.

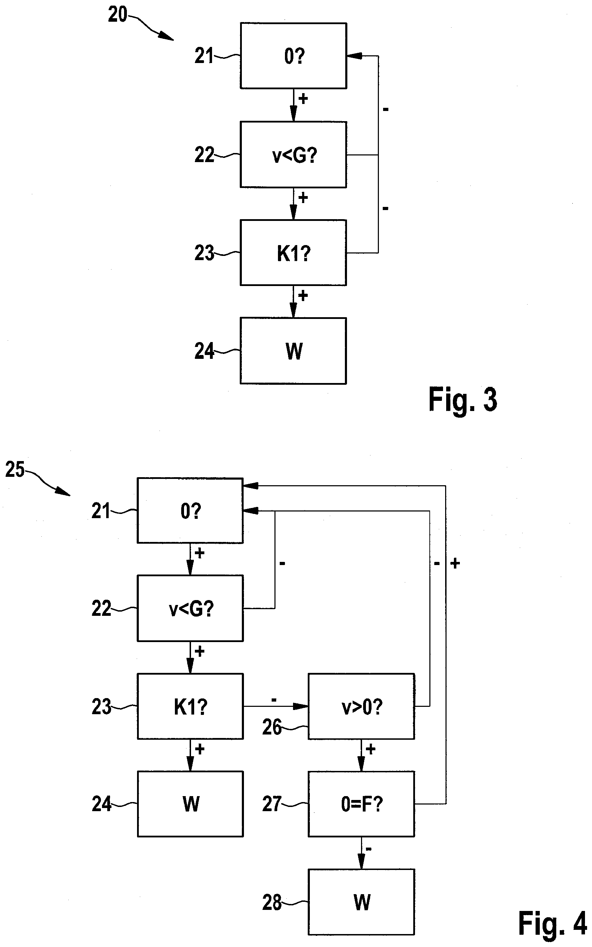

In den Figuren 3 und 4 sind zwei Ausführungsbeispiele für jeweils ein erfindungsgemäßes Verfahren 20, 25 dargestellt. Ein Pluszeichen wird der Bejahung, ein Minuszeichen der Verneinung einer Frage gleichgesetzt. Das erfindungsgemäße Verfahren 20, 25 wird jeweils von der Steuereinheit 11 ausgeführt. Hierzu liegen der Steuereinheit 11 die Informationen vor, ob ein Objekt O in dem Bereich 50 in der Umgebung des Fahrzeugs 46 vorhanden ist, welche Fahrzeuggeschwindigkeit v das Fahrzeug 46 hat, und mindestens eine Information über die Position des Fahrzeuges 46.

In dem in Figur 3 dargestellten Verfahren 20 überprüft die Steuereinheit 11 in einem ersten Schritt 21, ob ein Objekt O in dem Bereich 50 in der Umgebung des Fahrzeugs 46 vorhanden ist. Wird dieses bejaht, überprüft die Steuereinheit 11 in einem Schritt 22, ob die Fahrzeuggeschwindigkeit v einen Grenzwert G, z. B. 20 km/h, unterschreitet. Wird dieses bejaht, so überprüft die Steuereinheit 11 in einem dritten Schritt 23, ob die Position des Fahrzeuges 46 der ersten Kategorie K1 zuzuordnen ist. Wird dieses ebenfalls bejaht, so veranlasst die Steuereinheit 11 den Tongenerator 15 in einem Schritt 24, ein Warnsignal W auszugeben. Wird eine der Fragen der Schritte 21, 22, 23 verneint, so wird zu Schritt 21 zurückgesprungen. Die Reihenfolge der Schritte 21, 22, 23 kann in dem Verfahren 20 vertauscht sein.

Der Schritt 23 kann in einer ersten Alternative nur die Überprüfung enthalten, ob das Navigationssystem 12 die Position des Fahrzeuges 46 der ersten Kategorie K1 zugeordnet hat. Dieses ist dann der Fall, wenn die Zuordnung der Position des Fahrzeuges 46 zu einer Kategorie innerhalb des Navigationssystems 12 erfolgt und das Ergebnis der Zuordnung der Steuereinheit 11 als Information über die Position des Fahrzeuges 46 übermittelt wird. Alternativ kann Schritt 23 beinhalten, dass die Steuereinheit 11 selber anhand der von dem Navigationssystem 12 enthaltenen Information ermittelt, ob die Position des Fahrzeuges 46 der ersten Kategorie K1 zuzuordnen ist. Dieses ist insbesondere der Fall, wenn das Navigationssystem 12 die geographischen Koordinaten des Fahrzeuges 46 der Steuereinheit 11 als Information über die Position des Fahrzeuges 46 übermittelt.

Das Verfahren 25, das in Figur 4 dargestellt ist, wird nur in Bezug auf die Änderungen, die sich im Vergleich zu dem in Figur 3 dargestellten Verfahren 20 ergeben, beschrieben. Gleiche Verfahrensschritte werden mit den gleichen Bezugszeichen bezeichnet.

Wird in dem Verfahren 25 in Schritt 23 festgestellt, dass sich die Position des Fahrzeuges 26 nicht der ersten Kategorie K1 zuordnen lässt, so kann dennoch die Steuereinheit 11 ein Warnsignal W ausgeben lassen. Hierbei wird zunächst in einem Schritt 26 überprüft, ob das Fahrzeug 46 eine Fahrzeuggeschwindigkeit v > 0 aufweist und somit nicht still steht. Steht das Fahrzeug 46 nicht still, so wird zu einem Schritt 27 übergegangen. Alternativ kann in Schritt 26 überprüft werden, ob das Fahrzeug eine Geschwindigkeit größer einem Schwellenwert, z. B. 5 km/h, aufweist, und wenn dieses bejaht wird, zu Schritt 27 übergegangen werden.

In Schritt 27 wird von der Steuereinheit 11 überprüft, ob es sich bei dem Objekt O um einen Fußgänger F handelt. Die Überprüfung kann anhand der von den Sensoren 13, 14 übermittelten Informationen bezüglich des Abstandes des Objektes O ermittelt werden. Handelt es sich um einen Fußgänger, so wird kein Warnsignal W ausgegeben, sondern es wird zu Schritt 21 zurückgekehrt. Ist das Objekt O hingegen kein Fußgänger, so wird in einem nachfolgenden Schritt 28 die Ausgabe eines Warnsignals W veranlasst.

In dem Verfahren 25 kann auch alternativ und nicht dargestellt, Schritt 26 oder Schritt 27 weggelassen oder die Schritte 26, 27 vertauscht werden. So ist es denkbar, dass, wenn das Fahrzeug fährt und somit Schritt 26 bejaht wird, direkt ein Warnsignal W ausgegeben wird, ohne zu überprüfen, ob es sich um einen Fußgänger F handelt. Alternativ kann nur überprüft werden, ob es sich bei dem Objekt O um einen Fußgänger F handelt, ohne die Fahrzeuggeschwindigkeit v in einem Schritt 26 zu berücksichtigen.

## Patentansprüche

1. Verfahren (20, 25) zum selektiven Ausgeben eines Warnsignals (W) in einem Fahrzeug (42, 43, 44 46),
wobei einer Steuereinheit (11) von mindestens einem Sensor (13, 14) eine Information über ein Objekt (O) innerhalb eines Bereiches (50) in der Umgebung des Fahrzeugs (42, 43, 44, 46) übermittelt wird,
wobei der Steuereinheit (11) zumindest eine Information bezüglich einer Position des Fahrzeuges (42, 43, 44, 46) von einem Navigationssystem (12) übermittelt wird,
wobei daraufhin die Steuereinheit (11) in Abhängigkeit von der Position des Fahrzeuges (42, 43, 44, 46) ein Warnsignal (W) ausgeben lässt oder unterdrückt, wenn sich ein Objekt (O) innerhalb des Bereiches (50) befindet.
**dadurch gekennzeichnet,**
**dass** die Steuereinheit (11) das Warnsignal (W) unterdrückt, wenn sich das Fahrzeug (42, 43, 44, 46) an einem Fußgängerüberweg (35) befindet, wobei dem Navigationssystem (12) und/oder der Steuereinheit (11) eine geografische Information (30) über die Umgebung des Fahrzeuges (42, 43, 44, 46) zugänglich ist, die Informationen bezüglich der Positionen des Fahrzeuges (42, 43, 44, 46) enthält, an denen das Warnsignal (W) unterdrückt wird, wobei die geografische Information (30) Fußgängerüberwege (35) enthält.

2. Verfahren (20, 25) nach Anspruch 1,
**dadurch gekennzeichnet,**
**dass** die Steuereinheit (11) das Warnsignal (W) nur unterdrückt, wenn die Steuereinheit (11) anhand der von dem Sensor (13, 14) übermittelten Information verifiziert, dass das Objekt (O) ein Fußgänger (F) ist.

3. Verfahren (20, 25) nach einem der vorhergehenden Ansprüche,
**dadurch gekennzeichnet,**
**dass** das Warnsignal (W) nur im Stillstand des Fahrzeuges (42, 43, 44, 46) unterdrückbar ist.

4. Verfahren (20, 25) nach einem der vorhergehenden Ansprüche,
**dadurch gekennzeichnet,**
**dass** die selektive Ausgabe des Warnsignals (W) in Abhängigkeit von der Position des Fahrzeuges von dem Fahrer manuell aktivierbar und/oder deaktivierbar ist.

5. Steuereinheit (11) zum selektiven Ausgeben eines Warnsignals (W) in einem Fahrzeug (42, 43, 44, 46),
wobei der Steuereinheit (11) eine Information über ein Objekt (O) innerhalb eines Bereiches (50) in der Umgebung des Fahrzeugs (42, 43, 44, 46) von mindestens einem Sensor (13, 14) übermittelbar ist, wobei der Steuereinheit (11) zumindest eine Information bezüglich einer Position des Fahrzeuges (42, 43, 44, 46) von einem Navigationssystem (12) übermittelbar ist,
wobei ein Warnsignal (W) von der Steuereinheit (11) in Abhängigkeit von der Position des Fahrzeuges (42, 43, 44, 46) und eines Vorhandenseins des Objektes (O) ausgebbar oder unterdrückbar ist,
**dadurch gekennzeichnet,**
**dass** das Warnsignal (W) von der Steuereinheit (11) unterdrückbar ist, wenn sich das Fahrzeug (42, 43, 44, 46) an einem Fußgängerüberweg (35) befindet, wobei dem Navigationssystem (12) und/oder der Steuereinheit (11) eine geografische Information (30) über die Umgebung des Fahrzeuges (42, 43, 44, 46) zugänglich ist, die Informationen bezüglich der Positionen des Fahrzeuges (42, 43, 44, 46) enthält, an denen das Warnsignal (W) unterdrückt wird, wobei die geografische Information (30) Fußgängerüberwege (35) enthält..

6. Steuereinheit (11) nach Anspruch 5, **dadurch gekennzeichnet, dass** die Steuereinheit (11) nach einem Verfahren der Ansprüche 1 bis 5 betreibbar ist.

7. Steuer- und Navigationssystem (10) mit einer Steuereinheit (11) nach Anspruch 5 oder 6.

8. Steuer- und Navigationssystem (10) nach Anspruch 7, **dadurch gekennzeichnet, dass** das Navigationssystem (12) eine Information über eine Position des Fahrzeuges (42, 43, 44, 46), an denen das Warnsignal (W) unterdrückt oder ausgegeben wird, der Steuereinheit (11) zur Verfügung stellt.

## Claims

1. Method (20, 25) for selectively outputting a warning signal (W) in a vehicle (42, 43, 44, 46), an item of information relating to an object (O) inside a region (50) in the environment of the vehicle (42, 43, 44, 46) being transmitted to a control unit (11) by at least one sensor (13, 14), at least one item of information relating to a position of the vehicle (42, 43, 44, 46) being transmitted to the control unit (11) by a navigation system (12),
the control unit (11) then having a warning signal (W) output on the basis of the position of the vehicle (42, 43, 44, 46) or suppressing a warning signal if an object (O) is inside the region (50),
**characterized**
**in that** the control unit (11) suppresses the warning signal (W) if the vehicle (42, 43, 44, 46) is at a pedestrian crossing (35), an item of geographical information (30), which relates to the environment of the vehicle (42, 43, 44, 46) and contains information relating to the positions of the vehicle (42, 43, 44, 46) at which the warning signal (W) is suppressed, being accessible to the navigation system (12) and/or the control unit (11), the geographical information (30) containing pedestrian crossings (35).

2. Method (20, 25) according to Claim 1,
**characterized**
**in that** the control unit (11) suppresses the warning signal (W) only if the control unit (11) verifies, on the basis of the information transmitted by the sensor (13, 14), that the object (O) is a pedestrian (F).

3. Method (20, 25) according to one of the preceding claims,
**characterized**
**in that** the warning signal (W) can be suppressed only when the vehicle (42, 43, 44, 46) is at a standstill.

4. Method (20, 25) according to one of the preceding claims,
**characterized**
**in that** the selective output of the warning signal (W) can be manually activated and/or deactivated by the driver on the basis of the position of the vehicle.

5. Control unit (11) for selectively outputting a warning signal (W) in a vehicle (42, 43, 44, 46), an item of information relating to an object (O) inside a region (50) in the environment of the vehicle (42, 43, 44, 46) being able to be transmitted to the control unit (11) by at least one sensor (13, 14),
at least one item of information relating to a position of the vehicle (42, 43, 44, 46) being able to be transmitted to the control unit (11) by a navigation system (12),
a warning signal (W) being able to be output or suppressed by the control unit (11) on the basis of the position of the vehicle (42, 43, 44, 46) and a presence of the object (O),
**characterized**
**in that** the warning signal (W) can be suppressed by the control unit (11) if the vehicle (42, 43, 44, 46) is at a pedestrian crossing (35), an item of geographical information (30), which relates to the environment of the vehicle (42, 43, 44, 46) and contains information relating to the positions of the vehicle (42, 43, 44, 46) at which the warning signal (W) is suppressed, being accessible to the navigation system (12) and/or the control unit (11), the geographical information (30) containing pedestrian crossings (35).

6. Control unit (11) according to Claim 5, **characterized in that** the control unit (11) can be operated according to a method according to Claims 1 to 5.

7. Control and navigation system (10) having a control unit (11) according to Claim 5 or 6.

8. Control and navigation system (10) according to Claim 7, **characterized in that** the navigation system (12) provides the control unit (11) with an item of information relating to a position of the vehicle (42, 43, 44, 46) at which the warning signal (W) is suppressed or output.

## Revendications

1. Procédé (20, 25) de délivrance sélective d'un signal d'alerte (W) dans un véhicule (42, 43, 44, 46), une information à propos d'un objet (O) à l'intérieur d'une zone (50) dans l'environnement du véhicule (42, 43, 44, 46) étant communiquée à une unité de commande (11) par au moins un capteur (13, 14),
au moins une information concernant une position du véhicule (42, 43, 44, 46) étant communiquée à l'unité de commande (11) par un système de navigation (12), l'unité de commande (11) permettant ou inhibant alors la délivrance d'un signal d'alerte (W) en fonction de la position du véhicule (42, 43, 44, 46) lorsqu'un objet (0) se trouve à l'intérieur de la zone (50), **caractérisé en ce**
**que** l'unité de commande (11) inhibe le signal d'alerte (W) lorsque le véhicule (42, 43, 44, 46) se trouve au niveau d'un passage pour piétons (35), une information géographique (30) à propos de l'environnement du véhicule (42, 43, 44, 46) étant accessible au système de navigation (12) et/ou à l'unité de commande (11), laquelle contient des informations concernant les positions du véhicule (42, 43, 44, 46) auxquelles le signal d'alerte (W) est inhibé, l'information géographique (30) contenant les passages pour piétons (35).

2. Procédé (20, 25) selon la revendication 1, **caractérisé en ce que** l'unité de commande (11) n'inhibe le signal d'alerte (W) que lorsque l'unité de commande (11) vérifie à l'aide de l'information communiquée par le capteur (13, 14) que l'objet (O) est un piéton (F).

3. Procédé (20, 25) selon l'une des revendications précédentes, **caractérisé en ce que** le signal d'alerte (W) ne peut être inhibé que lorsque le véhicule (42, 43, 44, 46) est à l'arrêt.

4. Procédé (20, 25) selon l'une des revendications précédentes, **caractérisé en ce que** la délivrance sélective du signal d'alerte (W) peut être activée et/ou désactivée manuellement par le conducteur en fonction de la position du véhicule.

5. Unité de commande (11) destiné à la délivrance sélective d'un signal d'alerte (W) dans un véhicule (42, 43, 44, 46),
une information à propos d'un objet (O) à l'intérieur d'une zone (50) dans l'environnement du véhicule (42, 43, 44, 46) pouvant être communiquée à l'unité de commande (11) par au moins un capteur (13, 14),
au moins une information concernant une position du véhicule (42, 43, 44, 46) pouvant être communiquée à l'unité de commande (11) par un système de navigation (12),
un signal d'alerte (W) pouvant être délivré ou inhibé par l'unité de commande (11) en fonction de la position du véhicule (42, 43, 44, 46) et de la présence de l'objet (O),
**caractérisée en ce**
**que** le signal d'alerte (W) peut être inhibé par l'unité de commande (11) lorsque le véhicule (42, 43, 44, 46) se trouve au niveau d'un passage pour piétons (35), une information géographique (30) à propos de l'environnement du véhicule (42, 43, 44, 46) étant accessible au système de navigation (12) et/ou à l'unité de commande (11), laquelle contient des informations concernant les positions du véhicule (42, 43, 44, 46) auxquelles le signal d'alerte (W) est inhibé, l'information géographique (30) contenant les passages pour piétons (35).

6. Unité de commande (11) selon la revendication 5, **caractérisée en ce que** l'unité de commande (11) peut fonctionner d'après un procédé selon les revendications 1 à 5.

7. Système de commande et de navigation (10) comprenant une unité de commande (11) selon la revendication 5 ou 6.

8. Système de commande et de navigation (10) selon la revendication 7, **caractérisé en ce que** le système de navigation (12) met à la disposition de l'unité de commande (11) une information à propos d'une position du véhicule (42, 43, 44, 46) à laquelle le signal d'alerte (W) est inhibé ou délivré.
